(19) Europäisches Patentamt / European Patent Office / Office européen des brevets

(11) **EP 3 329 215 B1**

(12) **EUROPEAN PATENT SPECIFICATION**

(45) Date of publication and mention
of the grant of the patent:
**12.02.2020 Bulletin 2020/07**

(21) Application number: **15801930.7**

(22) Date of filing: **28.07.2015**

(51) Int Cl.:
***G01C 21/34*** *(2006.01)*

(86) International application number:
**PCT/IB2015/002152**

(87) International publication number:
**WO 2017/017494 (02.02.2017 Gazette 2017/05)**

(54) **METHOD AND DEVICE FOR ECO DRIVING ASSISTANCE**

HILFSVERFAHREN UND HILFSVORRICHTUNG FÜR ÖKONOMISCHE FAHREN

PROCÉDÉ ET DISPOSITIF POUR L'ASSISTANCE À LA CONDUITE ÉCOLOGIQUE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**06.06.2018 Bulletin 2018/23**

(73) Proprietor: **Volvo Truck Corporation
405 08 Göteborg (SE)**

(72) Inventor: **CHANSAVANG, Arnaud
69100 Villeurbanne (FR)**

(74) Representative: **Goreaud, Alexandra
Cabinet Germain & Maureau
12 rue Boileau
69006 Lyon (FR)**

(56) References cited:
**WO-A1-2015/022555      DE-A1-102009 053 982
DE-A1-102013 207 688      US-A1- 2011 098 915
US-A1- 2014 277 835**

## Description

The present invention is directed to a method, a system and an apparatus for optimizing the energy consumption of a vehicle.

Background:

The energy consumption is one of the key parameters in the cost and effectiveness of transport. This is particularly true for an industrial vehicle, or a fleet of industrial vehicles. Several solutions allow to evaluate the energy consumption according to the pathway used by the vehicle or planned to be used, with the help of a navigation system. For example, US 5913917 provides an example of such an eco-driving principle. The energy consumption may also be optimized according to the traffic conditions, by adopting particular settings of the vehicle, as described for example in US20110054768. However, there is still room to further optimize the energy consumption in case of unexpected changes in the traffic conditions, during the travel.

DE 10 2009 053 982 A1 also discloses a method for optimizing the energy consumption of a vehicle for a given travel, according to the preamble of claim 1. This method includes the steps of selecting a first pathway based on a theoretical energy consumption among several possible pathways, of monitoring the actual energy consumption within the selected pathway and comparing it with a theoretical energy consumption originally determined for the selected pathway and of triggering a re-computation of an alternative pathway under certain conditions.

US 2014/277835 A1, WO 2015/022555 A1, DE 10 2013 207688 A1 and US 2011/098915 A1 disclose similar methods.

Summary of the invention

It is the aim of the present invention to provide a system and a method for optimizing the energy consumption of a vehicle during a travel, in particular in case of unexpected changes in the conditions of travel on a selected pathway.

The method and the system of the present invention use several features and sources of information, among the following:

- a positioning system determining the real time location of the vehicle, like the GPS,
- a navigation module, comprising an eco-route processor, and a digital maps storage module where data related to the topography, the type of route, potential degraded segments of roads, and other parameters related to the characteristics of the routes are stored, and potentially an electronic horizon,
- a mission management system, comprising data related to loading points, delivery points, potentially refill of energy points, and any information used for the management of the mission,
- an eco-driving assistance processor, receiving input data related to the behavior of the vehicle and computing these data to determine an optimal vehicle behavior, and providing driving assistance to the driver, which includes requests and driving advices and notifications,
- an event manager, which collects information on the vehicle behavior, the driving environment, external data broadcast, and computes these data to identify an event, and eventually triggers adjustment of the route and/or re-computes processing of eco-driving assistance,
- a real time data pool, which provide data on real time status of the vehicle, of the surrounding vehicles, and which communicate these data to the navigation module, the eco-driving assistance processor and the event manager.

In particular, the method comprises the steps of

a) Selecting an economical pathway based on a theoretical energy consumption $TEp$ among several possible pathways, at start of a given mission,
b) Monitoring the actual energy consumption within the selected pathway and comparing it with a theoretical energy consumption originally determined for the selected pathway;
c) Monitoring and updating the theoretical energy consumption for a remaining part of the pathway, and comparing it with the theoretical energy consumption originally determined for the remaining part of the pathway;
d) Triggering a re-computation of an alternative pathway, and
e) Selecting an alternative pathway, among one or more re-computed pathways, preferably other than the remaining part of the pathway A.
f) Suggesting to the driver an alternative pathway or automatically uploading a re-computed pathway to the navigation system.

According to the invention, at step d), the re-computation of an alternative pathway is triggered only if at a position P, the actual energy consumption $EfEnp$ on the pathway A becomes higher than the theoretical energy consumption $TEp$ by an amount equal or higher than a first threshold value $\Delta1$, and the revised (or updated) theoretical energy consumption $TEbr$ for the remaining part of the travel A becomes higher than the theoretical energy consumption $TEb$ originally determined for the same remaining part by an amount equal or higher than a second threshold value $\Delta3$.

The parameters and conditions under which the re-computing of an alternative pathway is triggered and a re-computed pathway is selected, are detailed below.

It is also an object of the present invention to provide a device or an apparatus, which computes alternative pathways according to the present method, and instructs the driver accordingly.

Brief description of the drawings

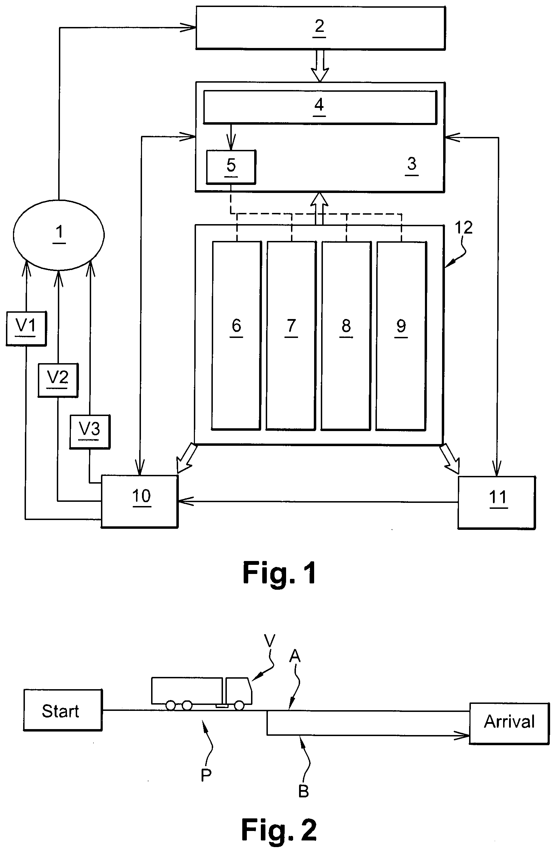

Figure 1:    architecture of the system

Figure 2:    example of a vehicle on a selected pathway

Figure 3:    chart of the method

Detailed description

The system of the present invention comprises a navigation module **3**, connected to a mission management module **2**, and a real time data pool **12**. The navigation module **3**, receives information from the mission management module **2**, wherein the driver **1** provides inputs related to the starting position of the mission, the arrival position of the mission, potential specific mandatory positions between the start and the end of the mission, and any other inputs corresponding to the constraints of the mission.

The navigation module **3** comprises a digital maps storage module **4**, wherein the routes and their characteristics are stored. The characteristics of the routes include the type of route, the potential degraded surface, the slopes of the routes, speed limitations concerning the type of the vehicle equipped with the present system, and optionally speed limitations concerning other type of vehicles, the number of lanes, the tolls, the customs, and other particular passages with associated costs, and any noticeable infrastructures like hotels, restaurants, fuel services, electrical power supply stations. The digital maps storage module **4** is preferably a read only memory (ROM) device. The navigation module **3** also comprises an eco-route processor **5**, connected to the digital maps storage module **4**, and able to determine the energy consumption according to a selected route, taking into account the characteristics of the routes stored in the digital maps storage module **4**, as well as potential additional costs related to tolls or customs or other transport fees. The eco-route processor **5**, also computes an expected time for a given pathway, or an expected time arrival.

The eco-route processor **5** is fed with additional parameters related to the real time data pool **12**. The real time data pool **12** comprises the vehicle characteristics, determined by one or more sensors **6**, positioned or included in the vehicle. In this way, the energy consumption expected for a given route is more precisely determined. The vehicle characteristics include one or more of the characteristics selected from the load of the vehicle, the pressure of the tires, the quality of the fuel, and any other physical data susceptible to influence the energy consumption of the vehicle. The effective energy consumption is also one of the parameters monitored by one or more sensors on the vehicle.

The eco-route processor **5** is in addition connected to communication means **7**, which receives data from one or more remote data centers. Such external data include the weather forecast, or the real weather conditions at a location remote to the vehicle, the traffic density, including traffic jams, temporarily closed portions of routes due to maintenance or other referenced events. The communication means **7**, may be of any type, such as radio, wireless, or other usual communication means. It is preferably a wireless communication mean. The remote data center may be of any kind, such as weather data center, traffic monitoring system, and any other remote source of information. The communication means 7 allow to collect information from any kind of remote data center. The communication means **7** may be either permanently connected to a selection of remote data centers, or connected at regular time periods, such as every 5 or 10 or 15 minutes.

The eco-route processor **5** is further connected to a positioning system **8**, such as the Global Positioning System (GPS), in order to determine in real time the position of the vehicle.

The eco-route processor **5** may further be connected to detection means **9** positioned on the vehicle and adapted to monitor the environment of the vehicle during a travel. The detection means **9** comprise one or more detection device selected from radars, infrared detection devices, cameras, vehicle-to-vehicle communication means, and any other detection means involved in the real time monitoring of the surrounding environment.

Sensors **6**, communication means **7**, positioning system **8**, and detection means **9**, determine together a real time data pool **12**. The eco-route processor **5** uses the data of the real time data pool **12**, either permanently or at regular time intervals, or at predetermined time periods. At least the eco-route processor **5** uses the real time data pool **12** for estimating the energy consumption at the beginning of the mission and identify the most economical pathway corresponding to the mission. The eco-route processor **5** regularly compute the data received from the real time data pool **12** during the mission in order to update the expected energy consumption for the remaining part of the pathway.

The real time data pool **12** is also connected to the eco-driving assistance processor **10**. Data and information collected by the real time data pool **12** are computed by the eco-driving assistance processor **10** to provide assistance to the driver **1.** According to the status of the traffic, and/or the behavior of the vehicle, the eco-driving assistance processor **10** may request specific actions **v1** to the driver **1**, like activation or deactivation of the cruise control, selection of a more appropriate gear ratio. The eco-driving assistance processor **10** may simply provide advices **v2** to the driver, or merely provide notifications **v3**. The nature of the requests **v1,** advices **v2** and notifications **v3** provided to the driver **1** may be predetermined within the program of the eco-driving assistance processor **10**. Alternatively, the nature of the requests **v1,** advices **v2** and notifications **v3** may be adapted according to the real time conditions. Also, the rank of each output provided by the eco-driving assistance processor **10** may be irreversibly predetermined as a request **v1**, advice **v2**, or notification **v3**, or may be flexibly adapted according to the real time conditions. For example, a notification **v3** under certain conditions, may become an advice **v2** under more exigent conditions of circulation in order to increase the attention of the driver **1**.

The real time data pool **12** is further connected to an event manager **11**, which compares the real time data, and in particular the effective energy consumption, with the expected values originally determined. The event manager **11** may trigger the re-computation of the pathway under predetermined conditions. Such a re-computation may be triggered by the event manager **11** in case the effective energy consumption significantly departs from the originally expected energy consumption. Alternatively or in addition, the event manager **11** may trigger the re-computation of the pathway when data from the communication means **7** indicate a significant increase of traffic somewhere in the remaining part of the pathway. The predetermined conditions under which the event manager **11** triggers a re-computation of the pathway are more precisely explained through the method of the present invention below.

The event manager **11** is in addition connected to the eco-driving assistance processor **10**. Depending on the real time conditions, the event manager **11** may trigger an adjustment of the eco driving assistance strategy. For example, some requests **v1** to the driver may be activated or deactivated. Similarly, specific driving advices **v2** or notifications **v3** to the driver **1** may be selected in order to limit the disturbance of the driver **1**, or on the contrary to increase his vigilance.

The event manager **11** is also connected to the navigation module **3**, in order to instruct the re-computation of the pathway. When predetermined conditions are satisfied, a request for re-computation **w2** is sent to the navigation module **3**. The eco-route processor **5** re-computes one or more possible alternative pathways with the corresponding expected time and energy consumption, and selects the alternative pathway which satisfies certain pre-requisites. Once the alternative pathway is selected, guidance instructions are uploaded and provided to the eco-driving assistance processor **10**, while the expected time and energy consumption are provided to the event manager **11** as a new reference time and new reference energy consumption.

The system also comprises a mean to notify the driver **1** when the eco-conditions are not satisfied, and when a re-computing of the pathway is triggered by the event manager **11**. Such a notification may be an audio signal, or a visual signal. The visual signals includes led, flashing led, and messages on a dashboard screen.

The system may be fully integrated to the vehicle, and operated by commands already incorporated to the dashboard or to the steering wheel, or to the header shelves of the vehicle. Alternatively, the system may be incorporated into a device that can be easily placed within the vehicle, and removed from the vehicle. Such a device comprises some input commands to determine the mission's parameters, a screen to guide to driver and/or an audio system to notify the driver in case of re-computing pathway. The device is equipped with the navigation module **3**, the digital maps storage module **4**, the eco-route processor **5**, the communication means **7**, the positioning system **8**, the event manager **11**, and the eco-driving assistance processor **10**. The device may be further connected to the sensors **6**, and the detection means **9** of the vehicle by wireless communication. Alternatively, the data related to the real state of the vehicle may be manually entered in the device by the driver **1**. Thus, the characteristics of the vehicle, including the weight, the loading, the type of the vehicle, and any other characteristics may be manually provided to the system, and used by the system to estimate the energy consumption for a given pathway.

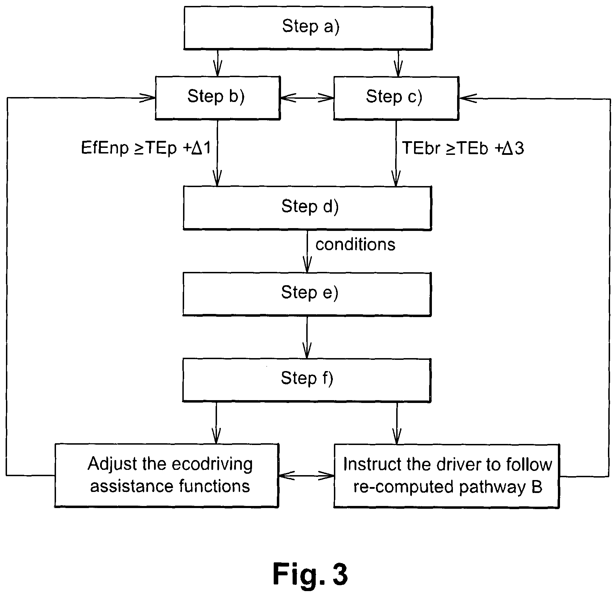

The present invention is also directed to the method explained below and illustrated in Figure 3.

Above and below, the terms "energy consumption" should be understood as consumption of the energy used for the running of the vehicle. The energy may be fuel or benzene, or gas, or any other carburant when the vehicle is driven by a traditional engine. The energy also refers to the electrical energy in case of an electrical or hybrid vehicle.

The term "theoretical" refers to an estimated value, which is estimated, or evaluated, according to a certain amount of parameters, and using computation means. A "theoretical" value may differ from the corresponding "actual" value, which corresponds to the value actually measured. Said value may be an estimated or actual time, an estimated or an actual energy consumption.

The method of the present invention comprises a first step a) comprising determining the most economical pathway for a given mission. In this step, the eco-route processor **5** computes several possible pathways from a given starting point to a selected destination, and considering the inputs from the mission module **2**. For each possible pathway X, a theoretical value TEx of the energy consumption is determined according to several parameters selected among the distance, the type of road, the topography, and any other parameters available through the digital maps storage module 4. The theoretical energy consumption TEx may be computed according to any method already known. For example, the theoretical energy consumption TEx may be the sum of the energy consumption estimated for several segments of a pathway X, according to the following:

$$TEx = \sum TEi$$

Wherein

TEx denotes the theoretical energy consumption for a pathway X,

TEi denotes the theoretical energy consumption for each segment i comprised in the pathway X,

Preferably, each segment is selected to have homogenous properties in term of energy consumption. In particular, segments may comprise urban segments, slopes, wherein several angle of inclination may be taken into consideration, flat segments, motorway, secondary road, and combine one or several of those parameters.

The theoretical value TEx may also consider whether the eco-driving assistance functions are activated or not. It is preferred that the theoretical consumption TEx is based on the energy consumption expected when the eco-driving assistance functions are activated. The eco-driving assistance functions comprise any mean used to optimize the energy consumption with respect to the environment, such as instructions to the driver, warning messages, automatic selection of settings. In particular, instructions or warning messages may relate to the use of the vehicle commands, like the gear rate selection, the brake activation, or the cruise control activation. The eco-driving assistance functions optionally comprise automatic management of some vehicle functions, such as an automatic speed control management, including speed limitation, or adaptive cruise control. The eco-driving assistance functions are managed by the eco-driving assistance processor **10**.

The theoretical energy TEx for each pathway X may further consider the traffic conditions, which are collected by the communication means **7**. The traffic conditions comprise the fluidity and the density of the traffic anywhere on the pathway. The system is able to collect information on a potential traffic congestion, a mandatory deviation due to maintenance work on the road, weather disturbances, and any other information related to the circulation conditions of the vehicles. In addition or alternatively, the traffic conditions over a pathway X may be estimated according to the time and/or the day of the week, based on statistical data stored in the digital maps storage module **4**. For instance, the system may consider that urban peripheries are usually more congested during certain periods of time and/or certain days in the week. These traffic data are computed by the eco-route processor **5** in such a way to increment or decrease the theoretical energy consumption TEx over a given pathway X, and according to the expected position of vehicle at a given time.

The theoretical energy consumption TEx for each possible pathway X may in addition consider the characteristics and/or the status of the vehicle, delivered by the sensors **6**. The characteristics comprise, between others, the dimensions and the weight of the vehicle, its average energy consumption per kilometer. The status of the vehicle provides indications on the effective running conditions of the vehicle, like the loading of the vehicle, the tire pressure, and any other physical parameters that may have an impact on the energy consumption.

Once the pathway having the lowest theoretical energy consumption is identified, the method may optionally integrate additional costs stored in the digital maps storage module **4**, like official fees, customs passages, tolls, and any other costs which may increase the global cost of the transport mission. The method may select the most economical pathway A either based only on the minimal theoretical energy consumption among several possible pathways X, or based on the minimal cost combining the theoretical energy consumption and extra costs.

The method may for example determine that the most economical pathway is not the less consuming pathway. For instance a flat pathway, wherein the energy consumption is low but wherein extra costs should be paid, may not be selected. Rather, it is possible that an elevated pathway is considered the most economical one, even if the energy consumption is increased due to hills or sloppy road segments.

The method comprises an optional step wherein the selection of the most economical pathway is moderated by the expected time of the travel, computed by the eco-route processor **5**. For instance, the most economical pathway may not be selected if it increases the time by more than a certain value with respect to another pathway, which is considered more expensive. Depending on the expectations of the mission, it may be determined that a pathway which significantly increases the time compared to the fastest possible pathway for a given mission, may not be selected. In particular, the expected time of the fastest pathway may be considered as the reference time $\theta ref$, and the expected time of the selected pathway should not increase the time by more than a first time threshold value $\theta 1$, compared to the reference time $\theta ref$. The threshold value $\theta 1$ may correspond to an increase of time by an amount equal or above around 30%, or 20% or 10%, compared to $\theta ref$. Alternatively, the threshold value $\theta 1$ may correspond to a predetermined fixe amount of time such as 10 minutes, or 20 minutes, or 30 minutes, or any other predetermined value. In other words, an economical pathway may be selected only if the condition 1 below is verified:

$$\text{Condition 1: } \theta \leq \theta ref + \theta 1$$

Wherein

$\theta$ denotes the expected time for the selected pathway,

θref denotes the expected time for the fastest pathway, and

θ1 denotes a first time threshold value

Alternatively, or in addition, it may be considered that a pathway having an increase of time compared to the fastest possible pathway, for a given mission, can be selected only if the expected energy consumption is lower than the fastest pathway by an amount equal or higher than around 10%, or 20% or 30%.

Before the mission starts, the most economical pathway A, having a theoretical energy consumption TE, and an expected time θ, is computed by the eco-route processor 5 with one or more of the above-described parameters, and is selected according to one of the following conditions C1, C2, C3 or C4:

- C1: The theoretical energy consumption TE for the selected pathway A, is the lowest among one or more possible pathways,
- C2: The cost comprising the theoretical consumption TE and potential extra costs is the lowest among one or more possible pathways,
- C3: The theoretical energy consumption TE is the lowest among one or more possible pathways, and the expected time θ for the selected pathway A, is not increased by more than a first time threshold value θ1 with regard to a reference value θref,
- C4: The cost comprising the theoretical consumption TE and potential extra costs is the lowest and the expected time θ, for the selected pathway A, is not increased by more than a first time threshold value θ1 with regard to a reference value θref.

The most economical pathway A is therefore dependent on the user constraints or wishes. However, the theoretical energy consumption is always considered for the computation and the selection of an economical pathway.

Once the most economical pathway A is computed with one or more of the parameters above-mentioned and selected according to one of the condition C1, C2, C3 or C4, above-mentioned, it is suggested to the driver, or automatically uploaded in the navigation module 3 in order to provide the appropriate instructions to the driver during the travel. The appropriate instructions include guidance along the pathway A and eventual requests v1, or advices v2 or notifications v3 from the eco-driving assistance processor 10.

The method comprises a second step b) comprising monitoring the actual energy consumption EfEn during the travel. After the mission has started, the actual energy consumption EfEn is monitored by one or more of the sensors 6. The cumulative energy consumption monitored from the starting point of the mission is compared to the expected energy consumption. Thus, for a given position P on the pathway A, the actual energy consumption EfEnp is compared to the theoretical energy consumption TEp corresponding to this position P, by the event manager 11. In case the actual energy consumption EfEnp at position P is higher than the theoretical energy consumption TEp by an amount equal or higher than a first threshold value Δ1, then it is determined that the traffic conditions, and/or the status of the vehicle do not correspond to the conditions initially considered to determine the pathway A. The first threshold value Δ1 may be a predetermined value, corresponding to an increase of the energy consumption by an amount equal or above to around 10% or 5%, or 2%, compared to the theoretical energy consumption TEp at position P. Alternatively, the first threshold value Δ1 may be a predetermined fixe value, such as 5 litters, or 10 litters, or 20 litters extra consumption in case the energy is fuel. In case the energy is electrical energy, the first threshold value Δ1 may be a fixe value of electrical energy.

Such an unexpected increase of energy consumption may be or may not be correlated to the measurement of other parameters monitored during the travel by the detection means 9. The other parameters monitored during the travel comprise the traffic conditions surrounding the vehicle.

Alternatively or in addition, the surrounding conditions may be monitored with the data collected from one or more of the sensors 6. These data include an unexpected high frequency of the brake activation, or an average speed significantly lower than the authorized speed limit for a given type of route. In general, all the data collected by the sensors 6 may be used. For example, a running speed below 50 km/hours on the motorway may be considered as due to a significant traffic alteration. Similarly, frequent activation of the brakes on a straight route may be interpreted as a consequence of traffic difficulties, either due to the traffic density or to other parameters like degraded surface of the road, or low adherence conditions due to icy weather.

If the actual energy consumption EfEnp at position P is not correlated to the surrounding conditions of the vehicle, it may be decided anyway to compute an alternative pathway.

According to the invention, as one of two necessary conditions, the re-computation of an alternative pathway is triggered by the event manager 11 only if the condition 2 below is verified:

$$\text{Condition 2: } EfEnp \geq TEp + \Delta1$$

Wherein

EfEnp denotes the actual energy consumption at position P, from the starting of the mission TEp denotes the theoretical energy consumption at position P, from the starting of the mission, and
Δ1 denotes a first threshold value.

The re-computation of the alternative pathways may consider the same parameters as those used for the computation of the original pathway A, or different parameters.

The alternative pathway B may be then selected by the eco-route processor **5**, according to one of the above mentioned condition C1, C2, C3 or C4, which can be the same as the one used for the selection of the original pathway A, or another one.

In order to limit the number of instructions to the driver or the number of itinerary changes, other conditions may be considered for the selection of the alternative pathway B. It can be decided that an alternative pathway is not selected if the corresponding theoretical energy consumption TEc, is significantly higher than the theoretical energy consumption TEb, originally determined for the remaining part of the pathway A. Thus, the re-computed pathway B will be selected only if the expected increase of energy consumption is equal or below a second threshold value $\Delta 2$, compared to TEb. Such a second threshold value $\Delta 2$ may correspond to an increase of energy consumption of an amount equal or higher than around 10%, or 20%, or 5%. Alternatively, the second threshold value $\Delta 2$ may be a predetermined fixe value, such as about 5 litters, or 10 litters, or 20 litters extra consumption in case the energy is fuel. In case the energy is electrical energy, the second threshold value $\Delta 2$ may be a fixe value of electrical energy.

$\Delta 2$ may be equal to $\Delta 1$, or higher than $\Delta 1$, or lower than $\Delta 1$.

Then, pathway B may be selected by the eco-route processor **5** only if the condition 3 below is verified:

$$\text{Condition 3: } \text{TEc} \leq \text{TEb} + \Delta 2$$

Wherein

TEc denotes the theoretical energy consumption for the pathway B, starting from the position P,

TEb denotes the theoretical energy consumption for the remaining part of the pathway A,

$\Delta 2$ denotes a second threshold value.

In addition or alternatively, the expected time of a re-computed pathway may be considered by the eco-route processor 5. In particular, the expected time $\theta b$, originally determined for the remaining part of the pathway A from the position P, may be considered as a reference time, and compared to the expected time of a re-computed pathway. The pathway B may thus be selected only if the corresponding expected time $\theta c$ is not higher than the reference $\theta b$ by an amount equal or higher than a second time threshold value $\theta 2$. Such a second time threshold value $\theta 2$ may correspond to an increase of time of up to around 20%, or 10%, or 5%, compared to the

expected time $\theta b$ for the remaining part of the pathway A. In other words, pathway B may be selected by the eco-route processor 5 only if condition 4 below is verified:

$$\text{Condition 4 : } \theta c \leq \theta b + \theta 2$$

Wherein

$\theta c$ denotes the expected time for the pathway B,

$\theta b$ denotes the expected time for the remaining part of the pathway A, and

$\theta 2$ denotes a second time threshold value.

Pathway B may thus be selected by the eco-route processor **5**, and suggested to the driver **1** if condition 2 is verified either alone, or in combination with one or two of the conditions 3 and 4.

Therefore, one of the following conditions may be used to select the re-computed pathway B:

- C5: the corresponding theoretical energy consumption TEc is the lowest one among several possible pathways.
- C6: the corresponding cost, comprising the theoretical energy consumption TEc combined with the extra costs available in the digital maps storage module **4**, is the lowest among several possible pathways.
- C7: the corresponding theoretical energy consumption TEc is the lowest one among several possible pathways, and the corresponding expected time $\theta c$ is not increased by more than a second time threshold value $\theta 2$ compared to the expected time $\theta b$, originally determined for the remaining part of the pathway A.
- C8: the corresponding cost, comprising the theoretical energy consumption TEc combined with the extra costs available in the digital maps storage module **4**, is the lowest among several possible pathways, and the corresponding expected time $\theta c$ is not increased by more than a second time threshold value $\theta 2$ compared to the expected time $\theta b$, originally determined for the remaining part of the pathway A.
- C9: the corresponding theoretical energy consumption TEc is the lowest one among several possible pathways, and the expected increase of energy consumption with regard to the expected energy consumption TEb, originally determined for the remaining part of the pathway A is below or equal a second threshold value $\Delta 2$.
- C10: the corresponding theoretical energy consumption TEc is the lowest one among several possible pathways, and the expected increase of energy consumption with regard to the expected energy consumption TEb, originally determined for the remaining part of the pathway A is below or equal a

second threshold value $\Delta 2$, and the corresponding expected time $\theta c$ is not increased by more than a second time threshold value $\theta 2$ compared to the reference time $\theta b$ originally determined for the remaining part of the pathway A.

- C11: the corresponding cost, comprising the theoretical energy consumption TEc combined with the extra costs available in the digital maps storage module **4**, is the lowest among several possible pathways, and the expected increase of consumption with regard to the expected consumption TEb, originally determined for the remaining part of the pathway A is below or equal a second threshold value $\Delta 2$.
- C12: the corresponding cost, comprising the theoretical energy consumption TEc combined with the extra costs available in the digital maps storage module **4**, is the lowest among several possible pathways, and the expected increase of energy consumption with regard to the expected energy consumption TEb, originally determined for the remaining part of the originally computed pathway A is below or equal a second threshold value $\Delta 2$, and the corresponding expected time $\theta c$ is not increased by more than a second time threshold value $\theta 2$ compared to the expected time $\theta b$, originally determined for the remaining part of the pathway A.

If the effective energy consumption EfEnp is higher than the expected value TEp by an amount equal or higher than a first threshold value $\Delta 1$, a signal may be sent to the driver. The signal may be an audio signal like a bip, or a visual signal, like a led or a flashing led, or a combination of both, or a message on a screen of the dashboard, or any other mean able to inform the driver that the eco-driving conditions are not respected and that the energy consumption is higher than expected.

The driver may manually request to the system to compute an alternative pathway, when he is informed of such an increase of energy consumption. Alternatively, the system may automatically re-compute an alternative pathway, select the alternative pathway B according to the method above-describe, and inform the driver of the existence of such an alternative pathway B. The driver may be requested to manually accept the alternative pathway B, before the system is able to guide him.

Alternatively, the system can automatically upload the selected alternative pathway B, and instruct the driver to follow the newly computed pathway B.

The method of the present invention optionally comprises a temporization step in order to avoid unnecessary solicitations of the driver. The temporization step organizes the signals in such a way that the signal informing the driver **1** that the eco driving conditions are no longer satisfied is provided at the same time than an alternative pathway B is suggested to him or automatically uploaded in the navigation instructions. Also, it may be considered that the system does not provide any disturbing information if the driver **1** has no possibility to follow the new instructions. For example, in case of a very dense traffic, where the vehicle is almost immobilized or where it is travelling very slowly, there is no need to provide new instructions or repetitive warning messages. Therefore, the temporization step may comprise the step of suggesting to the driver a re-computed pathway B only when the vehicle arrives at an access point of the re-computed pathway B. For example, the system may wait until the vehicle arrives at around 5 km and/or 1 km from the access point of the alternative pathway B, before providing the corresponding instructions to the driver. In addition, the temporization step may modify the settings of the eco-driving assistance processor **10** in order to not delivering request **v1** or advices **v2** to the driver when the traffic conditions do not allow him to follow these requests or advices.

The method comprises a third step c) comprising monitoring the expected energy consumption TEb for the remaining part of the originally selected pathway A. During the travel, for a given position P of the vehicle within the original pathway A, the theoretical energy consumption TEb, expected for the remaining part of the pathway A, is monitored by the eco-route processor **5** and regularly updated with new information provided by the communication means **7**. For example, the system may receive a warning information from a remote data center, related to an accident or a traffic jam somewhere in the remaining part of the pathway A. The revised theoretical energy consumption TEbr, computed by the eco-route processor **5**, is compared with the theoretical energy consumption TEb, originally determined for the remaining part of the pathway A. It may be decided that, in case of an expected increase of the theoretical energy consumption for the remaining part of the original pathway A by an amount equal or higher than a third threshold value $\Delta 3$, then the re-computation of an alternative pathway is triggered. The third threshold value $\Delta 3$ may correspond for example to an expected increase of the theoretical energy consumption of up to about 2%, or 5% or 10%, compared to the theoretical value TEb, originally determined.

According to the invention, as the second necessary condition, the re-computation of an alternative pathway is triggered by the event manager 11, only if condition 5 below is satisfied:

$$\text{Condition 5: } TEbr \geq TEb + \Delta 3$$

Wherein

TEb denotes the theoretical energy consumption originally determined for the remaining part of the pathway A at position P,

TEbr denotes the revised theoretical energy consumption for the remaining part of the pathway A at position P, and

$\Delta 3$ denotes a third threshold value.

Otherwise, the expected increase of energy consumption on the pathway A is considered acceptable and no itinerary change is initiated.

An alternative pathway may be re-computed with the same parameters as above-mentioned or with different parameters. The selection of a pathway B may be based on one of the conditions C5, C6, C7, C8, C9, C10, C11, C12 above-mentioned.

In order to limit the number of instructions to the driver **1** and/or the number of changes itineraries, it can be decided that pathway B is selected only in case the corresponding theoretical energy consumption TEc, is improved with regard to the revised theoretical energy consumption TEbr by an amount at least equal to a fourth threshold value Δ4. Δ4 can correspond for example to an improvement in the energy consumption of up to around 2%, 5% or 10% compared to the revised theoretical energy consumption TErb. In other words, pathway B may be selected by the eco-route processor **5** if condition 6 below is satisfied:

$$\text{Condition 6}: TEc \leq TEbr - \Delta 4$$

Wherein

TEc denotes the theoretical energy consumption for the pathway B from position P,

TEbr denotes the revised theoretical energy consumption for the remaining part of the pathway A from position P, and

Δ4 denotes a fourth threshold value.

Otherwise, it is considered that the benefit in term of energy consumption is too low, and pathway A is maintained. Δ4 may be equal to Δ3, or higher than Δ3, or lower than Δ3.

Alternatively or in addition, the pathway B may be selected because it offers the best compromise between the time increase and the theoretical energy consumption TEc. In particular, a revised expected time θrb is determined by the eco-route processor **5** for the remaining part of the pathway A at position P, and compared to the expected time θc, corresponding to the re-computed pathway B. The re-computed pathway B may be selected only if the corresponding expected time θc is significantly decreased with regard to the revised expected time θrb. Thus, a re-computed pathway B shall be selected by the eco-route processor **5** if the corresponding expected time θc is lower than the revised expected time θrb for the remaining part of the pathway A, by an amount equal or higher than a third time threshold value θ3. Such a third time threshold value θ3 may correspond to a decrease of time of up to around 5%, or 10%, or 20%, compared to the revised time for the remaining part of the pathway A. In other words, the re-computed pathway B is selected by the eco-route processor **5** only if condition 7 below is satisfied:

$$\text{Condition 7}: \theta c \leq \theta rb - \theta 3$$

wherein

θc denotes the expected time for the re-computed pathway B,

θrb denotes the revised expected time for the remaining part of the pathway A, at position P, and

θ3 denotes a third time threshold value

Otherwise, it may be considered that the benefit in term of time is not sufficient to justify a change of the itinerary.

Therefore, the re-computed pathway B may be selected by the eco-route processor **5** and suggested to the driver if condition 5 is satisfied, either alone, or in combination with one or two of the conditions 6 and 7.

In addition to the conditions C5, C6, C7, C8, C9, C10, C11, C12, One of the following conditions C13, C14 may be used to select the re-computed pathway B, in case the re-computation of the pathway is triggered by an unexpected increase of the theoretical energy consumption TEbr on the remaining part of the pathway A.

- C13: the corresponding theoretical energy consumption TEc is the lowest one among several possible pathways, or lower than a revised theoretical energy consumption for the remaining part of the pathway A by an amount at least equal to a fourth threshold value Δ4,
- C14: the corresponding theoretical energy consumption TEc is the lowest one among several possible pathways, or lower than the revised theoretical energy consumption for the remaining part of the pathway A by an amount at least equal to a fourth threshold value Δ4, and the corresponding expected time θb is decreased by an amount at least equal to a third time threshold value θ3, compared to the revised expected time θrb of the remaining part of the pathway A.

In the conditions C5, C6, C7, C8, C9, C10, C11, C12, C13 and C14, the terms "several possible pathways", at a position P, may include the remaining part of the original pathway A, from the position P to the arrival of the travel. Alternatively, it may be decided that the remaining part of the original pathway A is excluded from the selection, as soon as the step of re-computation of the pathway has been triggered.

Similarly as above described, the driver **1** may be informed that the eco-driving conditions for the remaining part of the pathway A may no longer be satisfied if the pathway A is maintained, and that an alternative pathway B may be followed. A signal can be provided, either audio, like a bip, or visual like a led or a flashing led, or a warning message on a screen of the dashboard, or any other signal allowing the driver to understand that eco-driving conditions will no longer be satisfied on the originally selected pathway A. The method may include a temporization step where the signal is delivered at the same time than the alternative pathway B is suggested to the driver. The driver may manually accept or activate the navigation through the alternative pathway B, or the system may automatically instruct the driver to follow the re-computed pathway B. The temporization step may also include waiting until the driver is able to follow the new instructions related to the re-computed pathway B. For instance, the system may provide the instruction when the vehicle arrives at around 5 km, and/or 1 km before an access point of the alternative pathway B.

Step b) and c) above mentioned may be either sequential or concomitant.

The event manager **11** may further check, before triggering a re-computation of the pathway, whether the revised theoretical energy consumption TEbr for the remaining part of the pathway A is significantly higher than the original theoretical energy consumption TEb originally evaluated. The situation may be such that difficult traffic conditions have been responsible for an increase of the actual energy consumption EfEnp, at the position P, such traffic conditions being terminated at position P or soon after the position P. Thus, there is no advantage to escape the traffic difficulties via another pathway. In other words, the re-computation of an alternative pathway may be triggered by the event manager **11** if both conditions 2 and 5 above are verified.

It results from the above description that the re-computation of an alternative pathway B is triggered by the event manager **11** :

- if at a given position P, the actual energy consumption EfEnp on the pathway A becomes higher than the theoretical energy consumption TEp by more than a threshold value Δ1, or
- if at a given position P, the revised expected theoretical energy consumption TEbr for the remaining part of the travel A becomes higher than the theoretical energy consumption TEb originally determined for the same remaining part by an amount equal or higher than a threshold value Δ3, or
- if at a given position P, the actual energy consumption EfEnp on the pathway A becomes higher than the theoretical energy consumption TEp by an amount equal or higher than a threshold value Δ1, and the revised theoretical energy consumption TEbr for the remaining part of the travel A becomes higher than the original theoretical energy consumption TEb for the same remaining part by an amount equal or higher than a threshold value Δ3,

and the selection of an alternative pathway B by the eco-route processor **5** is performed according to one of the conditions C5, C6, C7, C8, C9, C10, C11, C12, C13, C14, above-mentioned.

The present invention also encompasses a device used to optimize the energy consumption according to the method described herein. Further, the present invention encompasses a vehicle comprising the system described herein, or equipped with the device above-mentioned.

## Claims

1.  Method for optimizing energy consumption of a vehicle, said method comprising the steps of:

    a) Selecting an economical pathway (A) based on a theoretical energy consumption (TEp) among several possible pathways (X), at start of a given mission;
    b) Monitoring the actual energy consumption (EfEn) during the travel along the selected pathway (A) and comparing, for a given position (P) of said vehicle, the actual energy consumption (EfEnp) with the corresponding theoretical energy consumption (TEp) originally determined for the selected pathway (A);
    c) Monitoring and updating the theoretical energy consumption (TEb) for a remaining part of the selected pathway (A), thereby obtaining a revised theoretical energy consumption (TEbr), and comparing, for a given position (P) of said vehicle, the revised theoretical energy consumption (TEbr) with the corresponding theoretical energy consumption (TEb) originally determined for the remaining part of the selected pathway (A);
    d) Triggering a re-computation of an alternative pathway;
    e) Selecting an alternative pathway (B), among one or more re-computed pathways;

    **characterized in that**, at step d), the re-computation of an alternative pathway is triggered only if at a position (P) of said vehicle the actual energy consumption (EfEnp) on the initially selected pathway (A) becomes higher than the theoretical energy consumption (TEp) by an amount equal or higher than a first threshold value (Δ1), and the revised theoretical energy consumption (TEbr) for the remaining part of the initially selected pathway (A) becomes higher than the theoretical energy consumption (TEb) originally determined for the same remaining part by an amount equal or higher than a third threshold value (Δ3).

2.  Method according to claim 1 wherein step a) includes:

a1) computing a theoretical energy consumption for one or several possible pathways corresponding to a given mission, taking into account one or more of characteristics of routes, characteristics of the vehicle, and characteristics of traffic along said pathways,

a2) optionally computing extra costs for said possible pathways, such as official fees, customs passages, tolls and any other costs which may increase the global cost of the given mission,

a3) Identifying a pathway, wherein the theoretical energy consumption is minimal compared to the theoretical energy consumption of the other possible pathways, or wherein the theoretical energy consumption combined with extra costs is minimal compared to the other possible pathways,

a4) Optionally determining the expected time ($\theta$), for the identified pathway, and comparing it with the expected time $\theta$ref for the fastest possible pathway for said mission,

a5) Selecting the most economical pathway (A), having a theoretical energy consumption (TE), based on the minimal theoretical energy consumption or based on the minimal cost combining the theoretical energy consumption and extra costs, and optionally satisfying the condition:

$$\theta \le \theta\text{ref} + \theta 1$$

Wherein

$\theta$ denotes the expected time for the identified pathway,

$\theta$ref denotes the expected time for the fastest pathway, and

$\theta 1$ denotes a first time threshold value.

3. Method according to claim 1, wherein a re-computed pathway, having a theoretical energy consumption (TEc) and an expected time ($\theta$c) is selected as an alternative pathway (B) in step e) according to one of the following conditions :

- the expected increase of the theoretical energy consumption (TEc), compared with the theoretical energy consumption (TEb) initially determined for the remaining part of the initially selected pathway (A) below or equal a second threshold value ($\Delta 2$),

- the expected time ($\theta$c) is not increased by an amount equal or higher than a second time threshold value ($\theta 2$), compared to the expected time ($\theta$b) initially determined for the remaining part of the initially selected pathway (A),

- the theoretical energy consumption (TEc) is lower than the revised theoretical energy consumption (TEbr) for the remaining part of the initially selected pathway (A) by an amount equal or higher than a fourth threshold value ($\Delta 4$),

- the expected time ($\theta$c) is lower than a revised expected time ($\theta$rb) for the remaining part of the initially selected pathway (A), by an amount equal or higher than a third time threshold value ($\theta 3$).

4. Method according to claim 1, where step b) and step c) are concomitant.

5. Method according to any one of the preceding claims, further comprising a step f) of suggesting to the driver the alternative pathway (B), selected in step e), or automatically uploading the alternative pathway (B) to a navigation system.

6. Method according to claim 5, further comprising a temporization step g) of waiting until the vehicle arrives at around 5 km and/or around 1 km of an access point of the alternative pathway (B), before suggesting to the driver following the alternative pathway (B)

7. Method according to any one of the preceding claims, further comprising the step of modifying a setting of the strategy of an eco-driving assistance processor (10).

8. System for optimizing the energy consumption of a vehicle, wherein the system comprises :

- a mission management module (2), comprising data related to loading points, delivery points, potentially refill of energy points, and any information used for the management of the mission,

- a navigation module (3), comprising an eco-route processor (5) and a digital maps storage module (4), the eco-route processor (5) being connected to the digital maps storage module (4), and being able to determine the energy consumption according to a selected pathway, taking into account characteristics of routes stored in the digital maps storage module (4), as well as potential additional costs related to tolls or customs or other transport fees

- a real time data pool (12), comprising one or more sensors (6), one or more communication means (7), a positioning system (8), and optionally one or more detection means (9),

- an eco-driving assistance processor (10), configured to receive input data related to a behavior of the vehicle and to compute these data to determine an optimal vehicle behavior, and to provide driving assistance to the driver, which includes requests and driving advices and notifications,

- an event manager (11), configured to collect information on the vehicle behavior, the driving environment, external data broadcast, and to compute these data to identify an event, and eventually to trigger re-computation of the pathway and/or to re-compute processing of eco-driving assistance,

**characterized in that** the event manager (11) is configured to receive and compute und information from the real time data pool (12), and to provide instruction to the navigation module (3) to re-compute an alternative pathway only if the information received from the real time data pool (12) satisfy the two necessary conditions defined in claim 1.

9. System according to claim 8, wherein the event manager (11) is configured to modify the settings of the eco-driving assistance processor (10) in case the information received from the real time data pool (12) satisfy said two necessary conditions.

10. A vehicle comprising the system as described in claim 8 or 9.

**Patentansprüche**

1. Verfahren zum Optimieren des Energieverbrauchs eines Fahrzeugs, wobei das Verfahren die Schritte umfasst des:

a) Auswählens eines wirtschaftlichen Streckenverlaufs (A) unter mehreren möglichen Streckenverläufen (X) auf Basis eines theoretischen Energieverbrauchs (TEp) zu Beginn einer gegebenen Mission;

b) Überwachens des tatsächlichen Energieverbrauchs (EfEn) während der Fahrt entlang des ausgewählten Streckenverlaufs (A) und Vergleichens des tatsächlichen Energieverbrauchs (EfEnp) bei einer gegebenen Position (P) des Fahrzeugs mit dem entsprechenden theoretischen Energieverbrauch (TEp), der ursprünglich für den ausgewählten Streckenverlauf (A) bestimmt wurde;

c) Überwachens und Aktualisierens des theoretischen Energieverbrauchs (TEb) für einen verbleibenden Teil des ausgewählten Streckenverlaufs (A), wodurch ein korrigierter theoretischer Energieverbrauch (TEbr) erhalten wird, und Vergleichens des korrigierten theoretischen Energieverbrauchs (TEbr) bei einer gegebenen Position (P) des Fahrzeugs mit dem entsprechenden theoretischen Energieverbrauch (TEb), der ursprünglich für den verbleibenden Teil des ausgewählten Streckenverlaufs (A) bestimmt wurde;

d) Auslösens einer Neuberechnung eines alternativen Streckenverlaufs;

e) Auswählens eines alternativen Streckenverlaufs (B) unter einem oder mehreren neuberechneten Streckenverläufen;

**dadurch gekennzeichnet, dass** bei Schritt d) die Neuberechnung eines alternativen Streckenverlaufs nur dann ausgelöst wird, wenn an einer Position (P) des Fahrzeugs der tatsächliche Energieverbrauch (EfEnp) auf dem anfänglich ausgewählten Streckenverlauf (A) um einen Betrag von gleich oder größer als einem ersten Schwellenwert ($\Delta 1$) größer wird als der theoretische Energieverbrauch (TEp), und der korrigierte theoretische Energieverbrauch (TEbr) für den verbleibenden Teil des anfänglich ausgewählten Streckenverlaufs (A) um einen Betrag von gleich oder größer als einem dritten Schwellenwert ($\Delta 3$) größer wird als der theoretische Energieverbrauch (TEb), der ursprünglich für denselben verbleibenden Teil bestimmt wurde.

2. Verfahren nach Anspruch 1, wobei Schritt a) einschließt:

a1) Berechnen eines theoretischen Energieverbrauchs für einen oder mehrere mögliche Streckenverläufe, die einer gegebenen Mission entsprechen, unter Berücksichtigung von einer oder mehreren Eigenschaften von Routen, Eigenschaften des Fahrzeugs und Charakteristika von Verkehr entlang der Streckenverläufe,

a2) gegebenenfalls Berechnen von zusätzlichen Kosten für die möglichen Streckenverläufe, wie etwa offizieller Gebühren, Zolldurchquerungen, Mautgebühren und jeglicher sonstiger Kosten, die die Gesamtkosten der gegebenen Mission erhöhen können,

a3) Identifizieren eines Streckenverlaufs, bei dem der theoretische Energieverbrauch verglichen mit dem theoretischen Energieverbrauch der anderen möglichen Streckenverläufe minimal ist, oder bei dem der theoretische Energieverbrauch in Kombination mit zusätzlichen Kosten verglichen mit den anderen möglichen Streckenverläufen minimal ist,

a4) gegebenenfalls Bestimmen der erwarteten Zeit ($\theta$) für den identifizierten Streckenverlauf und Vergleichen derselben mit der erwarteten Zeit $\theta$ref für den schnellstmöglichen Streckenverlauf für die Mission,

a5) Auswählen des wirtschaftlichsten Streckenverlaufs (A), der einen theoretischen Energieverbrauch (TE) aufweist, auf Basis des minimalen theoretischen Energieverbrauchs oder auf Basis der minimalen Kosten, die den theoretischen Energieverbrauch und zusätzliche Kosten kombinieren, und der gegebenenfalls die Bedingung erfüllt:

$$\theta \leq \theta ref + \theta 1$$

wobei

θ die erwartete Zeit für den identifizierten Streckenverlauf bezeichnet,
θref die erwartete Zeit für den schnellsten Streckenverlauf bezeichnet, und
θ1 einen ersten Zeitschwellenwert bezeichnet.

3. Verfahren nach Anspruch 1, wobei in Schritt e) ein neuberechneter Streckenverlauf, der einen theoretischen Energieverbrauch (TEc) und eine erwartete Zeit (θc) aufweist, gemäß einer der folgenden Bedingungen als ein alternativer Streckenverlauf (B) ausgewählt wird:

- die erwartete Erhöhung des theoretischen Energieverbrauchs (TEc) ist verglichen mit dem theoretischen Energieverbrauch (TEb), der anfänglich für den verbleibenden Teil des anfänglich ausgewählten Streckenverlaufs (A) bestimmt wurde, kleiner als oder gleich einem zweiten Schwellenwert (Δ2),
- die erwartete Zeit (θc) wird verglichen mit der erwarteten Zeit (θb), die anfänglich für den verbleibenden Teil des anfänglich ausgewählten Streckenverlaufs (A) bestimmt wurde, nicht um einen Betrag von gleich oder größer als einem zweiten Zeitschwellenwert (θ2) erhöht,
- der theoretische Energieverbrauch (TEc) ist um einen Betrag von gleich oder größer als einem vierten Schwellenwert (Δ4) niedriger als der korrigierte theoretische Energieverbrauch (TEbr) für den verbleibenden Teil des anfänglich ausgewählten Streckenverlaufs (A),
- die erwartete Zeit (θc) ist um einen Betrag von gleich oder größer als einem dritten Zeitschwellenwert (θ3) niedriger als eine korrigierte erwartete Zeit (θrb) für den verbleibenden Teil des anfänglich ausgewählten Streckenverlaufs (A).

4. Verfahren nach Anspruch 1, wobei Schritt b) und Schritt c) gleichzeitig erfolgen.

5. Verfahren nach einem der vorstehenden Ansprüche, weiter einen Schritt f) des Vorschlagens des in Schritt e) ausgewählten alternativen Streckenverlaufs (B) an den Fahrer, oder automatischen Hochladens des alternativen Streckenverlaufs (B) in ein Navigationssystem umfassend.

6. Verfahren nach Anspruch 5, weiter einen Temporisierungsschritt g) des Abwartens umfassend, bis das Fahrzeug bei etwa 5 km und/oder etwa 1 km vor einem Zufahrtspunkt des alternativen Streckenverlaufs (B) ankommt, bevor dem Fahrer vorgeschlagen wird, dem alternativen Streckenverlauf (B) zu folgen.

7. Verfahren nach einem der vorstehenden Ansprüche, weiter den Schritt des Modifizierens einer Einstellung der Strategie eines Eco-Fahrassistenzprozessors (10) umfassend.

8. System zum Optimieren des Energieverbrauchs eines Fahrzeugs, wobei das System umfasst:

- ein Missionsverwaltungsmodul (2), das Daten, die sich auf Beladepunkte, Lieferpunkte, potentielle Energietankpunkte beziehen, und jegliche Informationen umfasst, die für die Verwaltung der Mission verwendet werden,
- ein Navigationsmodul (3), das einen Eco-Routenprozessor (5) und ein Speichermodul für digitale Karten (4) umfasst, wobei der Eco-Routenprozessor (5) mit dem Speichermodul für digitale Karten (4) verbunden ist und in der Lage ist, den Energieverbrauch gemäß eines ausgewählten Streckenverlaufs unter Berücksichtigung von Routencharakteristika, die im Speichermodul für digitale Karten (4) gespeichert sind, sowie potentieller zusätzlicher Kosten zu bestimmen, die sich auf Maut- oder Zoll- oder sonstige Transportgebühren beziehen,
- einen Echtzeit-Datenpool (12), der einen oder mehrere Sensoren (6), ein oder mehrere Kommunikationsmittel (7), ein Positionierungssystem (8) und gegebenenfalls ein oder mehrere Detektionsmittel (9) umfasst,
- einen Eco-Fahrassistenzprozessor (10), der dazu konfiguriert ist, Eingangsdaten zu empfangen, die sich auf ein Verhalten des Fahrzeugs beziehen, und diese Daten zu berechnen, um ein optimales Fahrzeugverhalten zu bestimmen, und dem Fahrer Fahrassistenz bereitzustellen, die Anfragen und Fahrempfehlungen und Benachrichtigungen einschließt,
- einen Ereignisverwalter (11), der dazu konfiguriert ist, Informationen über das Fahrzeugverhalten, die Fahrumgebung, externen Datenrundfunk zu sammeln und diese Daten zu berechnen, um ein Ereignis zu identifizieren und eventuell Neuberechnung des Streckenverlaufs auszulösen und/oder Eco-Fahrassistenz-Verarbeitung neu zu berechnen,

dadurch gekennzeichnet, dass der Ereignisverwalter (11) dazu konfiguriert ist, Informationen aus dem Echtzeit-Datenpool (12) zu empfangen und zu berechnen und eine Anweisung an das Navigationsmodul (3), einen alternativen Streckenverlauf zu berechnen, nur dann bereitzustellen, wenn die aus dem Echtzeit-Datenpool (12) empfangenen Informationen die zwei in Anspruch 1 definierten erforderlichen Bedingungen erfüllen.

9. System nach Anspruch 8, wobei der Ereignisverwalter (11) dazu konfiguriert ist, die Einstellungen des Eco-Fahrassistenzprozessors (10) zu modifizieren, falls die aus dem Echtzeit-Datenpool (12) empfangenen Informationen die zwei erforderlichen Bedingungen erfüllen.

10. Fahrzeug, das das System wie in Anspruch 8 oder 9 beschrieben umfasst.

**Revendications**

1. Procédé d'optimisation de la consommation d'énergie d'un véhicule, ledit procédé comprenant les étapes consistant :

   a) à sélectionner une voie économique (A) sur la base d'une consommation d'énergie théorique (TEp) parmi plusieurs voies possibles (X), au début d'une mission donnée ;
   b) à surveiller la consommation d'énergie réelle (EfEn) pendant le déplacement le long de la voie sélectionnée (A) et à comparer, pour une position donnée (P) dudit véhicule, la consommation d'énergie réelle (EfEnp) à la consommation d'énergie théorique correspondante (TEp) déterminée à l'origine pour la voie sélectionnée (A) ;
   c) à surveiller et mettre à jour la consommation d'énergie théorique (TEb) pour une partie restante de la voie sélectionnée (A), obtenant ainsi une consommation d'énergie théorique révisée (TEbr), et à comparer, pour une position donnée (P) dudit véhicule, la consommation d'énergie théorique révisée (TEbr) à la consommation d'énergie théorique correspondante (TEb) déterminée à l'origine pour la partie restante de la voie sélectionnée (A) ;
   d) à déclencher un recalcul d'une voie alternative ;
   e) à sélectionner une voie alternative (B), parmi une ou plusieurs voie(s) recalculée(s) ;

   **caractérisé en ce que**, à l'étape d), le recalcul d'une voie alternative n'est déclenché que si à une position (P) dudit véhicule, la consommation d'énergie réelle (EfEnp) sur la voie initialement sélectionnée (A) devient supérieure à la consommation d'énergie théorique (TEp) d'une quantité supérieure ou égale à une première valeur seuil ($\Delta 1$), et la consommation

d'énergie théorique révisée (TEbr) pour la partie restante de la voie initialement sélectionnée (A) devient supérieure à la consommation d'énergie théorique (TEb) déterminée à l'origine pour la même partie restante d'une quantité supérieure ou égale à une troisième valeur seuil ($\Delta 3$).

2. Procédé selon la revendication 1, dans lequel l'étape a) comporte le fait :

   a1) de calculer une consommation d'énergie théorique pour une ou plusieurs voie(s) possible(s) correspondant à une mission donnée, en tenant compte d'une ou de plusieurs parmi des caractéristiques d'itinéraires, des caractéristiques du véhicule et des caractéristiques de trafic le long desdites voies,
   a2) de calculer éventuellement des coûts supplémentaires pour lesdites voies possibles, tels que des frais officiels, des passages en douane, des péages et tout autre coût pouvant augmenter le coût global de la mission donnée,
   a3) d'identifier une voie, dans laquelle la consommation d'énergie théorique est minimale par rapport à la consommation d'énergie théorique des autres voies possibles, ou dans laquelle la consommation d'énergie théorique combinée à des coûts supplémentaires est minimale par rapport aux autres voies possibles,
   a4) de déterminer éventuellement le temps prévu ($\theta$), pour la voie identifiée, et de le comparer au temps prévu $\theta$ref pour la voie la plus rapide possible pour ladite mission,
   a5) de sélectionner la voie la plus économique (A), ayant une consommation d'énergie théorique (TE), sur la base de la consommation d'énergie théorique minimale ou sur la base du coût minimal combinant la consommation d'énergie théorique et les coûts supplémentaires, et satisfaisant éventuellement la condition :

   $$\theta \leq \theta\text{ref} + \theta 1$$

   où

   $\theta$ désigne le temps prévu pour la voie identifiée,
   $\theta$ref désigne le temps prévu pour la voie la plus rapide, et
   $\theta 1$ désigne une première valeur seuil de temps.

3. Procédé selon la revendication 1, dans lequel une voie recalculée, ayant une consommation d'énergie théorique (TEc) et un temps prévu ($\theta$c), est sélectionnée comme voie alternative (B) à l'étape e) selon l'une des conditions suivantes :

- l'augmentation prévue de la consommation d'énergie théorique (TEc), par rapport à la consommation d'énergie théorique (TEb) initialement déterminée pour la partie restante de la voie initialement sélectionnée (A) est inférieure ou égale à une deuxième valeur seuil ($\Delta$2),

- le temps prévu ($\theta$c) n'est pas augmenté d'une quantité supérieure ou égale à une deuxième valeur seuil de temps ($\theta$2), par rapport au temps prévu ($\theta$b) initialement déterminé pour la partie restante de la voie initialement sélectionnée (A),

- la consommation d'énergie théorique (TEc) est inférieure à la consommation d'énergie théorique révisée (TEbr) pour la partie restante de la voie initialement sélectionnée (A) d'une quantité supérieure ou égale à une quatrième valeur seuil ($\Delta$4),

- le temps prévu ($\theta$c) est inférieur au temps prévu révisé ($\theta$rb) pour la partie restante de la voie initialement sélectionnée (A), d'une quantité supérieure ou égale à une troisième valeur seuil de temps ($\theta$3).

4. Procédé selon la revendication 1, dans lequel l'étape b) et l'étape c) sont concomitantes.

5. Procédé selon l'une quelconque des revendications précédentes, comprenant en outre une étape f) consistant à suggérer au conducteur la voie alternative (B), sélectionnée à l'étape e), ou à télécharger automatiquement la voie alternative (B) sur un système de navigation.

6. Procédé selon la revendication 5, comprenant en outre une étape de temporisation g) consistant à attendre jusqu'à ce que le véhicule arrive à environ 5 km et/ou à environ 1 km d'un point d'accès de la voie alternative (B), avant de suggérer au conducteur de suivre la voie alternative (B).

7. Procédé selon l'une quelconque des revendications précédentes, comprenant en outre l'étape consistant à modifier un paramètre de la stratégie d'un processeur d'assistance à l'écoconduite (10).

8. Système d'optimisation de la consommation d'énergie d'un véhicule, dans lequel le système comprend :

- un module de gestion de mission (2), comprenant des données relatives aux points de chargement, aux points de distribution, aux points de recharge potentielle d'énergie, et toute information utilisée pour la gestion de la mission,

- un module de navigation (3), comprenant un processeur d'éco-itinéraire (5) et un module de stockage de cartes numériques (4), le processeur d'éco-itinéraire (5) étant connecté au module de stockage de cartes numériques (4), et étant capable de déterminer la consommation d'énergie selon une voie sélectionnée, en tenant compte des caractéristiques d'itinéraires stockés dans le module de stockage de cartes numériques (4), ainsi que des coûts additionnels potentiels liés à des péages ou à des douanes ou à d'autres frais de transport

- un groupe de données en temps réel (12), comprenant un ou plusieurs capteur(s) (6), un ou plusieurs moyen(s) de communication (7), un système de positionnement (8) et éventuellement un ou plusieurs moyen(s) de détection (9),

- un processeur d'assistance à l'écoconduite (10), configuré pour recevoir des données d'entrée liées à un comportement du véhicule et pour calculer ces données pour déterminer un comportement optimal du véhicule, et pour fournir une assistance à la conduite au conducteur, qui comporte des demandes et des conseils et notifications de conduite,

- un gestionnaire d'événements (11), configuré pour collecter des informations sur le comportement du véhicule, l'environnement de conduite, la diffusion de données externes, et pour calculer ces données pour identifier un événement, et éventuellement pour déclencher un recalcul de la voie et/ou pour recalculer le traitement de l'assistance à l'écoconduite,

**caractérisé en ce que**

le gestionnaire d'événements (11) est configuré pour recevoir et calculer des informations à partir du groupe de données en temps réel (12), et pour fournir une instruction au module de navigation (3) pour recalculer une voie alternative uniquement si les informations reçues du groupe de données en temps réel (12) satisfont les deux conditions nécessaires définies dans la revendication 1.

9. Système selon la revendication 8, dans lequel le gestionnaire d'événements (11) est configuré pour modifier les paramètres du processeur d'assistance à l'écoconduite (10) dans le cas où les informations reçues du groupe de données en temps réel (12) satisfont lesdites deux conditions nécessaires.

10. Véhicule comprenant le système tel que décrit dans la revendication 8 ou 9.

**Fig. 1**

**Fig. 2**

Step a)

Step b) ↔ Step c)

EfEnp ≥TEp +Δ1

TEbr ≥TEb +Δ3

Step d)

conditions

Step e)

Step f)

Adjust the ecodriving assistance functions ↔ Instruct the driver to follow re-computed pathway B

**Fig. 3**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5913917 A
- US 20110054768 A
- DE 102009053982 A1
- US 2014277835 A1
- WO 2015022555 A1
- DE 102013207688 A1
- US 2011098915 A1